# EUROPEAN PATENT APPLICATION

(11) **EP 1 750 261 A2**
(43) Date of publication of application: **07.02.2007**
(21) Application number: 06014171.0
(22) Date of filing: 07.07.2006
(51) Int. Cl.: G11B 19/12, G11B 7/125, G11B 7/085

(54) **Method of reducing disc lead-in time in optical recording/reproducing apparatus**

(30) Priority: 29.07.2005 KR 20050069795
(71) Applicant: Samsung Electronics Co., Ltd., Suwon-si, Gyeonggi-Do (KR)
(72) Inventor: Bang, Kyu Chul, Yeongdeungpo-Gu Seoul (KR); Kay, Hyon Sok, Yongsan-Gu Seoul (KR)
(74) Representative: Grünecker, Kinkeldey, Stockmair & Schwanhäusser Anwaltssozietät

(57) **Abstract**

A method of shortening a lead-in time for loading a disc having a reproduction-only area in an optical recording/reproducing apparatus includes finding and setting a signal value of a rewritable area of the disc to be loaded for recording/reproduction/erasing of the disc in a process adjustment operation, adjusting the signal value of the rewritable area on the basis of the set signal value thereof in an automatic mode, compensating a signal value of the reproduction-only area by a difference between the signal value of the rewritable area found in the process adjustment operation and a signal value of the reproduction-only area found in the process adjustment operation with reference to the adjusted signal value of the rewritable area to reset the signal value of the reproduction-only area, moving to the reproduction-only area after resetting the signal value of the reproduction-only area, and reading disc-related information.

## Description

### BACKGROUND OF THE INVENTION

### 1. Field of the Invention

Aspects of the present invention relate to a method for shortening a lead-in time for loading an optical disc having a reproduction-only area in an optical recording/reproducing apparatus, and more particularly, to a method for shortening disc loading time in an optical recording/reproducing apparatus which minimizes the time needed for signal adjustment of the reproduction-only area to reduce the lead-in time.

### 2. Description of the Related Art

With advances in video and audio media technologies, a recording medium in which high quality video and audio data can be recorded and stored for a lengthy period of time, for example an optical disc like a digital versatile disc (DVD), has been developed and made commercially available. Along with this medium, an optical recording/reproducing apparatus which can record/reproduce video and audio data on the optical disc, for example a DVD player, has also been developed and made commercially available. This optical recording/reproducing apparatus reproduces video and/or audio data recorded on the optical disc and outputs the reproduced data via a screen and/or a speaker.

The optical recording/reproducing apparatus has various advantages over a conventional video and/or audio reproducing apparatus in terms of higher-quality video and/or audio signal reproduction due to a higher signal-to-noise ratio, a lower noise level due to regularities in reproduction and modulation, minimal signal distortion, ghost-free reproduction, and a random access capability. Thus, the optical recording/reproducing apparatus has been in a trend towards rapid advances and widespread use.

Various types of optical recording/reproducing apparatuses, such as a compact disc player (CDP), a laser disc player (LDP), a compact disc graphic player (CDGP), and a video compact disc player (VCDP), have been developed and used extensively. Recently, DVDs have been developed using moving picture compression techniques, such as moving picture experts group 2 (MPEG2), moving picture experts group 4 (MPEG4), and Digital Video EXpress (DivX). A Blu-ray disc (BD) and a high definition-DVD (HD-DVD) have also been developed using a blue laser technology. Along with these, DVD players have been developed to record and playback corresponding discs.

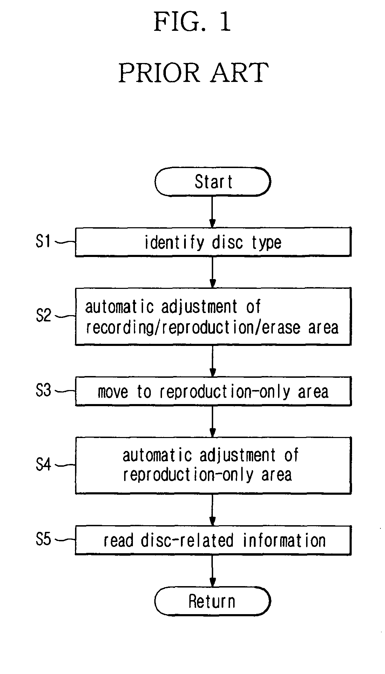

To optimally record/reproduce data on/from a disc, such an optical recording/reproducing apparatus automatically performs a signal adjustment procedure to adjust an optical signal reflected from the disc at an initial disc loading time. Referring to FIG. 1, a disc loading method in a conventional optical recording/reproducing apparatus is described. When a disc is inserted, the optical recording/reproducing apparatus first identifies the type of the inserted disc from a rewritable area thereof, and then sets a signal value for the rewritable area to a basic signal value for the rewritable area found in a process adjustment operation to record/reproduce/erase the type identified disc (S1).

After the signal value for the rewritable area of the disc is set, a signal adjustment procedure is automatically performed to optimally record and reproduce the disc. The signal adjustment procedure mainly includes a servo signal adjustment operation to drive the disc, and a radio frequency (RF) signal adjustment operation to enhance the quality of an optical information signal which is recorded/reproduced on/from the disc. After the disc type is identified, signal adjustment operations are automatically performed in a predetermined order as follows. Using the basic signal value for the rewritable area found in the process adjustment operation, a signal adjustment operation is automatically performed on the rewritable area of the disc in which data is recorded, or from which data is reproduced or erased (S2).

After finishing the signal adjustment operation on the rewritable area, the optical recording/reproducing apparatus sets a signal value for a reproduction-only area of the disc to a basic signal value found in the process adjustment operation, and moves to the reproduction-only area (S3). Then, another signal adjustment operation is performed on the reproduction-only area in which basic disc-related information is recorded in a form of permanently unalterable wobbles or pits (S4). After the signal adjustment procedure is automatically performed, the basic disc-related information stored in a lead-in zone of the disc such as disc IDentification (ID), disc size, data area configuration, copyright protection and copy prevention data is read once when the disc is loaded, and a disc recording or reproduction operation is performed on the basis of this information (S5).

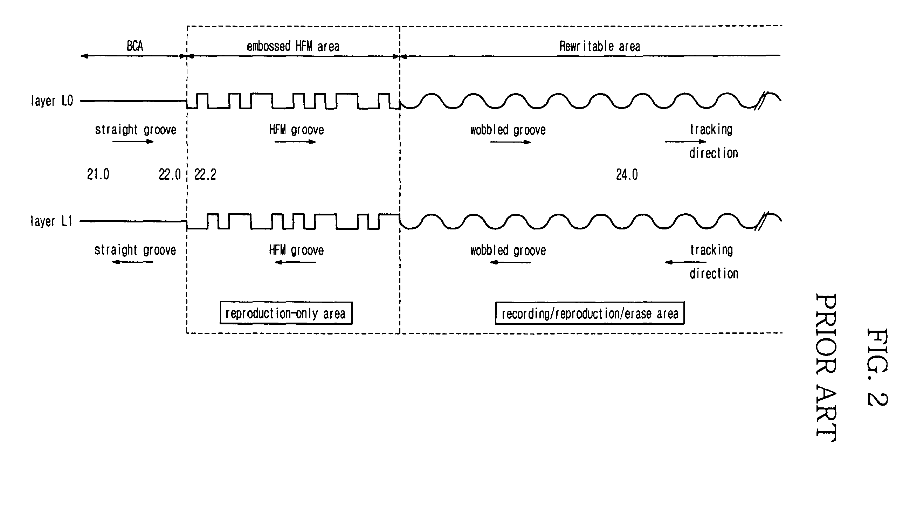

The basic disc-related information such as disc ID, disc size, data area configuration, copyright protection and copy prevention data is stored in the reproduction-only area which is typically located at an inner most portion of the disc, as shown in FIG. 2, in the form of permanently unalterable wobbles or pits. The reproduction-only area is followed by the recording/reproduction/erase area, hereinafter referred to generally as a rewriteable area.

FIG. 2 illustrates the track format of a typical rewritable BD (BD-RE), which is one of high-density optical discs including areas having different physical/chemical properties. In the shown example, the BD includes layers L0 and L1, which are read in opposite path directions during recording and/or reproducing. For each of the layers L0, L1, the BD has a burst cutting area (BCA) with a straight groove. The BCA extents from a radius of 21.0 to 22.2 mm. Adjacent to the BCA is the reproduction-only lead in area extending from a radius of 22.2mm to 24, which includes high frequency modulated (HFM) grooves in an embossed HFM area.

Adjacent to the reproduction-only area is a rewriteable area having a wobbled groove at a frequency other than the HFM grooves. As shown, in layer L0, the tracking direction goes from an inner portion to an outer portion starting from the BCA, passing through the reproduction-only area, and ending in the rewritable area. The layer L1 has an opposite tracking direction which begins at the rewritable area, extends through the reproduction-only area, and ends at the BCA.

In FIG. 2, the reproduction-only area storing the disc-related basic information and the rewritable area are constructed to have different physical properties (track pitch, data bit length, wobble formation, and the like) and different chemical properties. In particular, the reproduction-only area is different from the rewritable area in characteristics of an optical signal reflected from an information layer of the disc. For this reason, it is necessary to perform a separate signal adjustment operation on the reproduction-only area with a different optical signal from that of the rewritable area. This means that it takes a longer time to perform a signal adjustment procedure, lengthening the disc loading time (lead-in time) and thus degrading performance of the optical recording/reproducing apparatus.

The signal adjustment procedure which is adapted to adjust an optical signal reflected from a disc is performed to optimally record/reproduce data on/from the disc. The signal adjustment procedure makes up a large portion of the lead-in time (disc loading time), thus it is necessary to minimize the time taken for this signal adjustment procedure to improve overall system performance.

Moreover, if the optical recording/reproducing apparatus sets the signal value for the reproduction-only area to the basic signal value found in the process adjustment operation, movement from the rewritable area to the reproduction-only area may be unstable owing to influence of internal and external environments of the optical recording/reproducing apparatus.

### SUMMARY OF THE INVENTION

According to aspects of the invention, a method for shortening a lead-in time for loading a disc in an optical recording/reproducing apparatus is provided, wherein a signal value for a reproduction-only area of the disc is reset with reference to a result of signal adjustment on a rewritable area of the disc to minimize the time taken by signal adjustment on the reproduction-only area, thereby reducing the lead-in time (disc loading time).

Additional aspects and/or advantages of the invention will be set forth in part in the description which follows and, in part, will be obvious from the description, or may be learned by practice of the invention.

In accordance with an aspect of the invention, there is provided a method of shortening a lead-in time for loading a disc having a reproduction-only area in an optical recording/reproducing apparatus, comprising: identifying a type of the disc to be loaded and setting a signal value of a rewritable area of the disc for recording/reproduction/erasing of the type identified disc; adjusting the signal value of the rewritable area using the set signal value thereof in an automatic mode; resetting a signal value of the reproduction-only area with reference to the adjusted signal value of the rewritable area; and moving to the reproduction-only area after the resetting a signal value of the reproduction-only area, and reading disc-related information.

According to an aspect of the invention, the method further comprises setting the signal value of the reproduction-only area for access to the reproduction-only area.

According to an aspect of the invention, the signal value of the rewritable area and the signal value of the reproduction-only area may be found and set in a process adjustment operation.

According to an aspect of the invention, at the resetting a signal value of the reproduction-only area, the signal value of the reproduction-only area is compensated by a difference between the signal value of the rewritable area found in the process adjustment operation and the signal value of the reproduction-only area found in the process adjustment operation with reference to the adjusted signal value of the rewritable area, to reset the signal value of the reproduction-only area.

According to an aspect of the invention, the adjusting the signal value of the rewritable area where data is recorded, reproduced or erased is automatically performed before the resetting a signal value of the reproduction-only area.

According to an aspect of the invention, the signal value of the reproduction-only area may be reset using a result of the adjusting the signal value of the rewritable area.

In accordance with another aspect of the invention, there is provided a method of shortening a lead-in time for loading a disc having a reproduction-only area in an optical recording/reproducing apparatus, comprising: finding and setting a signal value of a rewritable area of the disc to be loaded for recording/reproduction/erasing of the disc in a process adjustment operation; adjusting the signal value of the rewritable area on the basis of the set signal value thereof in an automatic mode; compensating a signal value of the reproduction-only area by a difference between the signal value of the rewritable area found in the process adjustment operation and a signal value of the reproduction-only area found in the process adjustment operation with reference to the adjusted signal value of the rewritable area, to reset the signal value of the reproduction-only area; and moving to the reproduction-only area after resetting the signal value of the reproduction-only area, and reading disc-related information.

According to an aspect of the invention, the method further comprises finding and setting the signal value of the reproduction-only area of the disc to be loaded for access to the reproduction-only area, in the process adjustment operation.

According to an aspect of the invention, the adjusting the signal value of the rewritable area where data is recorded, reproduced or erased may be automatically performed before resetting the signal value of the reproduction-only area.

According to an aspect of the invention, the signal value of the reproduction-only area may be reset using a result of the adjusting the signal value of the rewritable area.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a flow chart illustrating a disc loading method in a conventional optical recording/reproducing apparatus;
FIG. 2 is a block diagram illustrating the track format of a typical high-density optical disc (rewritable BD or BD-RE);
FIG. 3 is a block diagram showing the system configuration of an optical recording/reproducing apparatus according to an embodiment of the present invention; and
FIG. 4 is a flow chart illustrating a disc loading method in the optical
recording/reproducing apparatus according to an embodiment of the present invention.

### DETAILED DESCRIPTION OF THE EMBODIMENTS

Reference will now be made in detail to embodiments of the present invention, examples of which are illustrated in the accompanying drawings, wherein like reference numerals refer to the like elements throughout. The embodiments are described below to explain the present invention by referring to the figures.

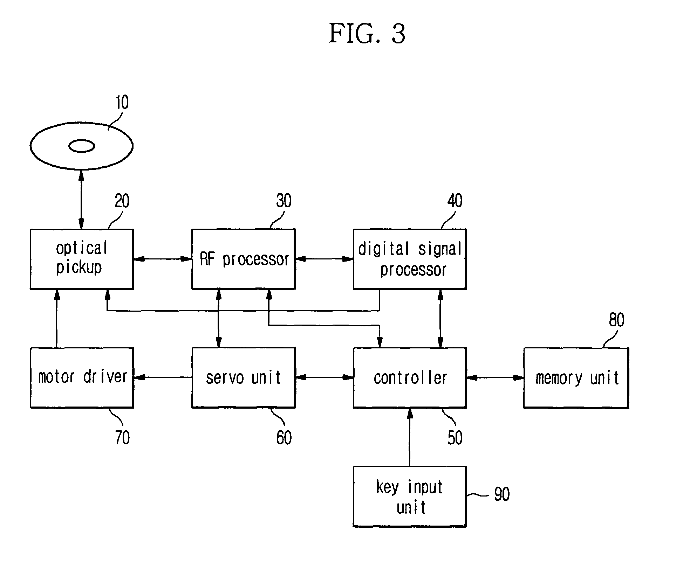

FIG. 3 is a block diagram showing the system configuration of an optical recording/reproducing apparatus according to an embodiment of the present invention. The optical recording/reproducing apparatus comprises a disc 10, an optical pickup 20, a radio frequency (RF) processor 30, a digital signal processor 40, a controller 50, a servo unit 60, a motor driver 70, a memory unit 80, and a key input unit 90. The optical pickup 20 performs an optical pickup operation on the playback or recordable disc 10 to read stored data from the disc 10 or to write data to the disc 10. The RF processor 30 wave-shapes the data read by the optical pickup 20 into an RF signal. The RF processor 30 also performs an automatic laser power control operation to optimally control the output of a laser diode (LD) for the disc 10. The digital signal processor 40 converts the RF signal wave-shaped by the RF processor 30 into digital data and demodulates the converted data, and modulates data to be recorded.

The controller 50 controls the optical pickup 20, the RF processor 30, the digital signal processor 40, and the servo unit 60 in response to an input command of the user, and supplies focusing and tracking servo on/off commands to the servo unit 60. When the disc 10 is inserted, the controller 50 identifies the type of the disc 10 from the rewritable area of the disc 10, sets a signal value for recording/reproduction/erasing of the disc 10 to a basic signal value for the rewritable area found in a process adjustment operation, and sets a signal value for access to the reproduction-only area to a basic signal value for the reproduction-only area found in the process adjustment operation. The controller 50 automatically controls separate signal adjustment operations on the rewritable area and the reproduction-only area of the disc 10. However, the signal adjustment operations are different for the rewritable area and the reproduction-only area of the disc 10.

Before signal adjustment of the reproduction-only area, the controller 50 performs an automatic signal adjustment operation with respect to the rewritable area using the optical pickup 20 to output a light using the set rewritable signal value and analyzes the results in order to determine an optimized rewriteable signal value. The controller 50 resets the signal value for the reproduction-only area by compensating the set signal value for the reproduction-only area according to the optimized rewriteable signal value. The compensation is by a difference between the basic signal value for the rewritable area found in the process adjustment operation and the corresponding basic signal value for the reproduction-only area found therein with reference to a result (reset optimized rewritable signal value) obtained from the signal adjustment operation on the rewritable area. Thus, the reset signal is a function of the adjusted signal of the rewritable area and the difference in set basic signals. The controller 50 then controls the disc loading procedure to move to the reproduction-only area and proceed to a next stage without performing a signal adjustment operation on the reproduction-only area.

After the disc 10 is loaded, the controller 50 recognizes disc-related information (disc ID, disc size, data area configuration, copyright protection and copy prevention data) stored in a lead-in zone of the disc 10, and stores the disc-related information in the memory unit 80 as a backup. The servo unit 60 generates drive signals for focusing, tracking, and a spindle of the optical pickup 20 using the RF signal generated from the RF processor 30 and the like under the control of the controller 50. The motor driver 70 performs a servo control operation to change a rotational speed of the disc 10 and a data read position of the optical pickup 20 under the control of the servo unit 60.

The memory unit 80 is used to store the disc-related information read and downloaded from the lead-in zone of the disc 10. The key input unit 90 is used to input key signals indicating opening or closing of the disc tray, power on or off for an operation of the optical recording/reproducing apparatus, data recording, reproducing or erasing of the disc 10 to the controller 50. It is understood that various ones of the elements shown in FIG. 3 need not be used in all aspects of the invention. By way of example, the input unit 90 could be replaced by a remote control and/or combined with a touch screen display.

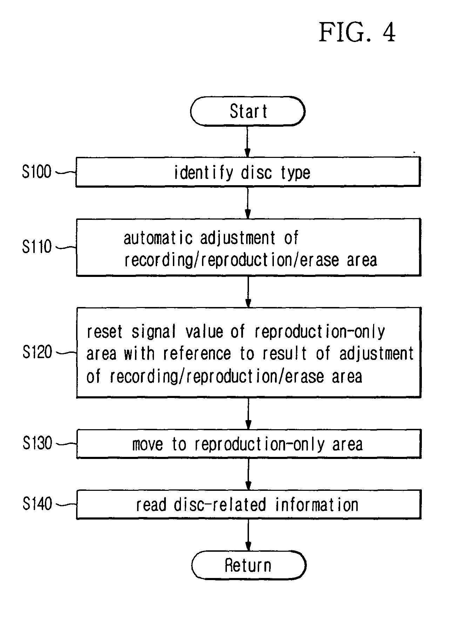

A description will hereinafter be given of operations and effects of a method for shortening a lead-in time in the optical recording/reproducing apparatus with the above-stated configuration, an example of which is set forth in the flow chart shown in FIG. 4. First, the user opens a disc tray, inserts a disc 10 in the disc tray, and closes the disc tray. Then, the controller 50 loads the inserted disc 10, identifies the type thereof from a rewritable area thereof, and sets a signal value for recording, reproducing or erasing the disc 10 to a basic signal value for the rewritable area found in a process adjustment operation according to the identified type of the disc 10 (S100). However, it is understood that operation S100 need not include insertion of the disc 10 through a tray or otherwise, such as when the apparatus is started with the disc 10 already inserted or where a cartridge houses the disc 10 and the cartridge is inserted into a slot without a tray.

The controller 50 also sets a signal value for access to a reproduction-only area of the disc 10 in the optical recording/reproducing apparatus to a basic signal value for the reproduction-only area found in the process adjustment operation of operation S100 according to the identified type of the disc 10 according to an aspect of the invention.

After the signal value for recording, reproducing or erasing of data is set to the corresponding basic signal value found in the process adjustment operation, an automatic signal adjustment operation is started to optimally adjust servo and RF signals for use in recording and/or reproducing the disc 10. According to an aspect of the invention, the site in which the signal adjustment operation is automatically performed is the rewritable area where data is recorded, reproduced or erased (S110). By way of example, a servo signal adjustment operation to drive the disc, and a radio frequency (RF) signal adjustment operation to enhance the quality of an optical information signal which is recorded/reproduced on/from the disc are performed in operation S110.

After finishing the signal adjustment operation on the rewritable area, the signal value for the reproduction-only area is reset with reference to the adjusted signal value of rewritable area (a result of the signal adjustment operation on the rewritable area) (S120). That is, the reset signal value for the reproduction-only area is the signal value for the reproduction-only area that is compensated by a difference between the basic signal value for the rewritable area found in the process adjustment operation and the corresponding basic signal value for the reproduction-only area found therein with reference to the result of the signal adjustment operation on the rewritable area. However, it is understood that the adjustment can be otherwise determined, and that other factors, functions, and/or relationships can be used to refine the reset signal value to more closely approximate an actual adjusted value.

After resetting the signal value for the reproduction-only area, the disc loading method is moved to the reproduction-only area, and basic disc-related information stored in a lead-in zone of the disc 10 such as disc ID, disc size, data area configuration, and copyright protection and copy prevention data is read once when the disc 10. As such, the read-only disc-related information is loaded without an actual signal adjustment operation on the reproduction-only area. A disc recording or reproduction operation is performed on the basis of this disc-related information (S140).

As is apparent from the above description, aspects of the present invention provide a method for shortening a lead-in time for loading a disc in an optical recording/reproducing apparatus, wherein a signal value for a reproduction-only area of the disc is reset with reference to a result of signal adjustment on a rewritable area of the disc, and actual signal adjustment on the reproduction-only area is skipped to shorten the lead-in time (disc loading time), thereby enhancing overall performance of the optical recording/reproducing apparatus.

In addition, stable movement between the rewritable area and reproduction-only area can be assured regardless of influence of internal and external environments of the optical recording/reproducing apparatus during disc loading according to an aspect of the invention.

While not required, it is understood that all or portions of the method of the present invention can implemented using computer software encoded on one or more computer readable media for use with one or more general or special purpose computers.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of shortening a lead-in time for loading a disc having a reproduction-only area and a rewritable area in an optical recording/reproducing apparatus, comprising:
identifying a type of the disc to be loaded and setting an initial rewritable signal value of the rewritable area of the disc for recording/reproduction/erasing of the type identified disc;
adjusting the initial rewriteable signal value by using the set initial rewriteable signal value in an automatic mode to provide an adjusted rewritable signal value for use with the rewritable area;
resetting a reproduction-only signal value of the reproduction-only area with reference to the adjusted rewriteable signal value; and
moving an optical pickup to the reproduction-only area after the resetting the reproduction-only signal value of the reproduction-only area, and reading disc-related information using the reset reproduction-only signal value.

2. The method as set forth in claim 1, further comprising setting an initial reproduction-only signal value of the reproduction-only area for access to the reproduction-only area before resetting the reproduction-only signal value.

3. The method as set forth in claim 2, wherein the identifying and setting comprises, based upon the identified type of the disc, performing a process adjustment operation to set the initial rewritable signal value and the initial reproduction-only signal value.

4. The method as set forth in claim 3, wherein the resetting the reproduction-only signal value comprises compensating the initial reproduction-only signal value by a difference between the initial rewritable signal value and the initial reproduction-only signal value with reference to the adjusted rewriteable signal value.

5. The method as set forth in claim 1, wherein the adjusting the rewritable signal value comprises automatically performing the adjusting before the resetting the reproduction-only signal value.

6. The method as set forth in claim 5, wherein the resetting the reproduction-only signal value comprises resetting the reproduction-only signal value using a result of the adjusting the rewritable signal value.

7. A method of shortening a lead-in time for loading a disc having a reproduction-only area in an optical recording/reproducing apparatus, comprising:
finding and setting an initial rewritable signal value of a rewritable area of the disc to be loaded for recording/reproduction/erasing of the disc in a process adjustment operation;
adjusting the initial rewriteable signal value of the rewritable area on the basis of the set initial rewriteable signal value in an automatic mode;
compensating a reproduction-only signal value of the reproduction-only area by a difference between the set initial rewriteable signal value and an initial reproduction-only signal value of the reproduction-only area found in the process adjustment operation with reference to the adjusted rewritable signal value to reset the reproduction-only signal value; and
moving to an optical pickup to the reproduction-only area after resetting the reproduction-only signal value and reading disc-related information.

8. The method as set forth in claim 7, further comprising finding and setting the reproduction-only signal value of the reproduction-only area of the disc to be loaded for access to the reproduction-only area, in the process adjustment operation.

9. The method as set forth in claim 7, wherein the adjusting the rewritable signal value comprises automatically performing the adjusting the rewritable signal value before resetting the reproduction-only signal value.

10. The method as set forth in claim 9, wherein the resetting the reproduction-only signal value comprises resetting the reproduction-only signal value using a result of the adjusting the rewritable signal value.

11. A method of performing signal optimization for use by an optical recording/reproducing apparatus in transferring data with respect to an optical recording medium having a reproduction-only area and a rewritable area, the method comprising:
setting an initial first signal value of the rewritable area and an initial second signal value of the reproduction-only area of the optical recording medium according to a type of optical recording medium received at the apparatus; and
after performing an optimization procedure with respect to the rewriteable area to provide an optimized first signal value and without performing the optimization procedure for the second signal value with respect to the reproduction-only area, adjusting the initial second signal value according to the optimized first signal value to obtain an improved second signal value for use with the reproduction-only area.

12. The method of claim 11, further comprising adjusting the initial first signal value using an optical signal transferred with respect to the rewritable area according to the initial first signal value to provide the optimized first signal value optimized for use with the rewritable area.

13. The method of claim 12, wherein the adjusting the initial first signal value comprises performing a servo signal adjustment operation to drive the optical recording medium during recording and/or reproducing data with respect to the rewritable area, and performing a radio frequency (RF) signal adjustment operation to enhance the quality of an optical information signal which is transferred with respect to the rewritable area.

14. The method of claim 13, further comprising reading data from the reproduction-only area according to the improved second signal value without performing the servo signal adjustment operation to drive the optical recording medium during reproducing data with respect to the reproduction-only area, and without performing the RF signal adjustment operation to enhance the quality of the optical information signal which is reproduced from the reproduction-only area.

15. The method of claim 11, wherein the adjusting the initial second signal value further comprises adjusting the initial second signal value according to the optimized first signal value and a difference between the initial first and second signal values.

16. The method of claim 14, wherein the adjusting the initial second signal value further comprises adjusting the initial second signal value according to the optimized first signal value and a difference between the initial first and second signal values.

17. A computer readable medium encoded with a method of performing signal optimization implemented by a computer according to the method of claim 11 for use in transferring data with respect to an optical recording medium having a reproduction-only area and a rewritable area.

18. A recording and/or reproducing apparatus which transfers data with respect to an optical recording medium having a reproduction-only area and a rewritable area, the apparatus comprising:
an optical pickup which transfers data with respect to the optical recording medium; and
a controller which controls the optical pickup to transfer the data according to an optimized first signal value and an improved second signal value, and determines the optimized first signal value and the improved second signal value by:
setting an initial first signal value of the rewritable area and an initial second signal value of the reproduction-only area of the optical recording medium according to a type of optical recording medium received at the apparatus, and
after performing an optimization procedure with respect to the rewriteable area to provide the optimized first signal value and without performing the optimization procedure for the second signal value with respect to the reproduction-only area, adjusting the initial second signal value according to the optimized first signal value to obtain the improved second signal value for use with the reproduction-only area.

19. The apparatus of claim 18, wherein the controller further determines the optimized first signal value and the improved second signal value by controlling the optical pickup to transfer an optical information signal with respect to the rewritable area according to the initial signal value and using the optical information signal to adjust the initial first signal value to provide the optimized first signal value optimized for use with the rewritable area.

20. The apparatus of claim 19, further comprising:
a radio-frequency processor which wave-shapes the data read by the optical pickup into a radio frequency (RF) signal; and
a servo unit which drives the optical pickup according to a servo signal from the controller,
wherein the controller adjusts the initial first signal value by performing a servo signal adjustment operation to drive the optical recording medium during recording and/or reproducing data with respect to the rewritable area, and performing an RF signal adjustment operation to enhance the quality of the optical information signal which is transferred with respect to the rewritable area.

21. The apparatus of claim 20, wherein the controller reads data from the reproduction-only area according to the improved second signal value without performing the servo signal adjustment operation to drive the optical recording medium during reproducing data with respect to the reproduction-only area, and without performing the RF signal adjustment operation to enhance the quality of the optical information signal which is reproduced from the reproduction-only area.

22. The method of claim 18, wherein the controller adjusts the initial second signal value according to the optimized first signal value and a difference between the initial first and second signal values.

23. The apparatus of claim 21, wherein the controller adjusts the initial second signal value according to the optimized first signal value and a difference between the initial first and second signal values.
